**Europäisches Patentamt**

**European Patent Office**

**Office européen des brevets**

(19)

(11) Veröffentlichungsnummer: **0 213 271 B2**

(12) ## NEUE EUROPÄISCHE PATENTSCHRIFT

(45) Veröffentlichungstag der neuen Patentschrift:
**16.10.91 Patentblatt 91/42**

(51) Int. Cl.⁵: **B01D 53/36, B01J 37/02**

(21) Anmeldenummer: **86105305.6**

(22) Anmeldetag: **17.04.86**

(54) **Verfahren zur Erzeugung von Katalysatoren für die Reduktion von Stickoxiden aus Abgasen und dergleichen chemische Luftreinigungsverfahren.**

(30) Priorität: **24.07.85 DE 3526383**

(43) Veröffentlichungstag der Anmeldung:
**11.03.87 Patentblatt 87/11**

(45) Bekanntmachung des Hinweises auf die
Patenterteilung:
**30.11.88 Patentblatt 88/48**

(45) Bekanntmachung des Hinweises auf die
Entscheidung über den Einspruch:
**16.10.91 Patentblatt 91/42**

(84) Benannte Vertragsstaaten:
**AT BE CH DE FR GB IT LI LU NL SE**

(56) Entgegenhaltungen:
**DE-A- 2 626 597
DE-A- 2 927 253
DE-C- 2 658 569
FR-A- 2 341 364
US-A- 4 518 710**

(56) Entgegenhaltungen:
**A.H. Dietzel, "Emaillierung", Springer-Verlag
1981, S. 214-216
Chemical Abstracts, Vol. 92 (1980), 117222q
Chemical Abstracts, Vol. 96 (1982), 40251w
Chemical Abstracts, Vol. 96 (1982), 91009f
Chemical Abstracts, Vol. 96 (1982), 40225r
Ullmanns Encyklopädie der techn. Chemie, 4.
Aufl., Bd. 13, S. 562-563**

(73) Patentinhaber: **DIDIER-WERKE AG
Lessingstrasse 16-18
W-6200 Wiesbaden (DE)**

(72) Erfinder: **Stein, Hermann
Auf dem Koppel 2
W-6702 Bad Dürkheim (DE)**
Erfinder: **Kainer, Hartmut, Dr.
Sauerbruchstrasse 1a
W-6200 Wiesbaden 12 (DE)**
Erfinder: **Grimm, Daniel
Hauptstrasse 10
W-6229 Schlangenbad 3 (DE)**

(74) Vertreter: **Brückner, Raimund, Dipl.-Ing.
c/o Didier-Werke AG Lessingstrasse 16-18
W-6200 Wiesbaden (DE)**

EP 0 213 271 B2

## Beschreibung

Die Erfindung bezieht sich auf ein Verfahren zur Erzeugung von Katalysatoren für die Reduktion von Stickoxiden aus Abgasen und dergleichen chemische Luftreinigungsverfahren, bei welchem ein katalytisch aktives Material auf einen Träger aus Metall, vorzugsweise Edelstahl, in Form einer gelochten Metallplatte, von Streckmetall, eines Netzwerkes, vorzugsweise Gewebes, Gewirkes oder Gestrickes, aus Metalldraht, mit hoher spezifischer Oberfläche aufgetragen und daran gebunden wird.

Aus der DE-AS 2353640 ist ein Katalysatorträger mit einem aus möglichst gleichmäßig über das Volumen verteiltem Metalldraht bestehenden Rohling zwischen Stützmatten bekannt, wobei der Rohling mehrere aus einem endlos legierten, etwa bis 800°C hitzebeständigen Draht gestrickte, gewirkte oder gewebte, übereinandergepackte und untereinander fixierte Lagen aufweist. Darüber, wie das katalytisch aktive Material auf dem Katalysatorträger gebunden wird, ist aus der DE-AS 2353640 nichts zu entnehmen.

Aus der DE-AS 2846476 ist ein Verfahren zur Herstellung von gesinterten Formkörpern, die Titandioxid, eine aktive Komponente sowie Molybdänoxid als Bindemittel für das Titandioxid enthalten, wobei man das dampfförmige Molybdänoxid auf pulverförmigen Titanoxid in einer Atmosphäre von Molybdänoxiddampf bei Temperaturen von 460 bis 650°C abscheidet, auf diese Weise ein pulverförmiges Gemisch herstellt, welches das pulverförmige Titanoxid mit dem darauf abgeschiedenen Molybdänoxid und die aktive Komponente enthält, dem pulverförmigen Gemisch eine solche Wassermenge zusetzt, daß ein viskoses Gemisch gebildet wird, das viskose Gemisch knetet, aus dem gekneteten Gemisch einen Formkörper herstellt und den Formkörper unter Bildung eines Sinterproduktes kalziniert. Bei diesem Vorschlag wird eine Plattenstruktur beispielsweise ausgebildet, indem ein viskoses Material, erhalten durch Zusatz von 25 bis 35 Gew.-%, vorzugsweise 24 bis 28 Gew.-% Wasser, zu dem pulverförmigen Gemisch auf einer porösen Stahlplatte ausgestrichen wird. Es können auch andere Plattenstrukturen ausgebildet werden, indem das unter Zugabe von 20 bis 30 Gew.-% Wasser erhaltene viskose Material auf verschiedene Metalldrahtnetze aufgestrichen wird.

Aus der DE-PS 2853023 ist ein plattenförmiger Katalysator, bestehend aus einem Träger, einer darauf aufgebrachten Metall-Zwischenschicht und einer darauf abgeschiedenen, für die Reduktion von $NO_x$ in einem Abgas geeigneten katalytisch aktiven Komponente bekannt, wobei als Träger eine perforierte Metallplatte verwendet wird, und wobei beide Oberflächen der Platte durch Aufsprühen von geschmolzenem Metall aufgerauht werden. Als katalytische Substanzen, die für die Reduktion des in einem Abgas enthaltenen $NO_x$ mittels Ammoniak verwendet werden können, sind beispielsweise Titan und Vanadium bzw. Titan, Wolfram und eines oder mehrere der Elemente Vanadin, Molybdän oder Eisen bekannt. Derartige katalytische Substanzen hat man bis zum Vorschlag der DE-PS 2853023 beispielsweise als Hydroxid oder wasserlösliches Salz zu einer Aufschlämmung oder Paste verarbeitet, der erforderlichenfalls ein geeignetes Trägermaterial zugesetzt wird, um die dabei erhaltene Aufschlämmung oder Paste in Form eines Überzugs auf ein Substrat für den Katalysator aufzubringen, danach zu trocken und zu kalzinieren, um sie für die Verwendung an das Substrat zu binden. Auch wurden die katalytischen Substanzen in Form des Oxids oder Sulfats an die Substrate gebunden. Mit dem Vorschlag nach der DE-PS 2853023 soll erreicht werden, daß Teile der auf den einander gegenüberliegenden Seiten der Trägerplatte abgeschiedenen, katalytisch aktiven Substanzen durch die Perforation hindurch miteinander in Verbindung stehen, um dadurch sicherzustellen, daß die auf der Trägerplatte abgeschiedenen, katalytisch aktive Substanz fest daran haftet.

Aus der DE-PS 2927246 ist ein plattenförmiger Katalysator zur Reduktion von Stickstoffoxiden in Abgasen mit einem auf Metall aufgebrachten, porösen, fest haftenden Träger aus Metalloxid, der mit einer katalytisch aktiven Komponente beladen ist, bekannt, wobei der Katalysator durch Aufbringen von feinteiliges Titanoxid und kolloidale Kieselsäure im Gewichtsverhältnis von 1 : 10 bis 10 : 1 enthaltendem Schlamm auf ein Metallnetz einer Feinheit von 0,147 bis 1,651 mm lichte Maschenweite hergestellt und wobei dem Träger vor, bei oder nach dem Aufbringen die aktive Komponente einverleibt wird. Dabei wird der Schlamm aus dem fein verteilten Titanoxid und dem kolloidale Kieselsäure enthaltenden Binder gebildet und auf das Metallnetz aufgetragen, der daraus entstandene Träger getrocknet und in eine Lösung eines Salzes der aktiven Komponente getaucht sowie anschließend getrocknet und erforderlichenfalls gebrannt. Es besteht auch die Möglichkeit, daß das Metallnetz in ein Beschichtungsbad getaucht wird, das Titanoxid und Binder enthält, dann das Metallnetz getrocknet und der so gebildete Träger in eine Lösung eines Salzes der aktiven Komponente getaucht und anschließend getrocknet und erforderlichenfalls gebrannt wird.

Die DE-B- 1542023 bezieht sich auf einen Trägerkatalysator für die Oxidation aromatischer und ungesättigter aliphatischer Kohlenwasserstoffe. Er weist einen nicht porösen Träger auf, welcher vor dem Aufbringen der katalytisch wirksamen Substanz mit einem Oxid der Metalle Vanadium, Molybdän, Wolfram, Chrom, Titan und bzw. oder Eisen grundiert worden ist. Als nicht poröser Katalysatorträger werden Quarz, Kieselsäure und insbesondere Porzellan, geschmolzenes Aluminiumoxid, Siliciumcarbid und geschmolzene oder gesinterte Silikate, z.B. Aluminium-, Magnesium-, Zink- oder Zirkonsilikat empfohlen. Glatte Oberflächen der Träger können vor ihrer Verwendung durch Ätzen, z.B. mit Flußsäure, Fluorwasserstoff, Ammoniumfluoridlösung, geringfügig aufgerauht werden, um die Haftfähigkeit der aktiven Masse zu erhöhen. Daran schließt sich ein Trocknen des Trägers an, bevor er mit einer aktive Masse beschichtet wird. Die Beschichtung kann durch Erhitzen verfestigt werden, bis mitverwendete organische Substanzen verbrannt sind.

Aus der US-A 4233143 ergibt sich ein Katalysator für die Reduktion von Stickoxiden aus Abgasen und dergleichen. Zu seiner Herstellung wird zunächst ein plattenförmiges Katalysatorelement aus einem flüssigen Brei bestimmter Metalloxide hergestellt und dieses danach gebrannt, pulverisiert und ein metallisches Netz unter Verwendung eines Binders mit dem Pulver beschichtet. Der so geschaffene, an seiner Oberfläche nichtmetallische poröse Träger wird dann mit der katalytisch aktiven Komponente durch Eintauchen in herkömmlicher Weise versehen.

Die bekannten Verfahren zur Herstellung von Katalysatoren benötigen daher zur Erlangung großer freier Strömungsquerschnitte und großer volumenbezogener Oberflächen einen vergleichsweise hohen Herstellungaufwand, ohne daß die Haftung des katalytisch aktiven Materials in befriedigender Weise gelöst werden kann.

Aufgabe der vorliegenden Erfindung ist die einfachere Schaffung von Katalysatoren hoher Betriebssicherheit bei möglichst großem freien Strömungsquerschnitt und möglichst großer volumenbezogener Oberfläche.

Diese Aufgabe wird erfindungsgemäß dadurch gelöst, daß man als Binder des katalytisch aktiven Materials eine die Oberfläche des metallischen Trägers ätzende Säure verwendet und daß man den beschichteten Träger trocknet und/oder temperiert und/oder bis zur Anwendungsgrenztemperatur des verwendeten metallischen Trägers, z.B. Edelstahlgewebes brennt. Der Binder kann dabei ausschließlich aus dieser Säure bestehen oder die Säure als ein Bestandteil neben anderen, vorzugsweise anderen Bindern oder Füllstoffen enthalten. Die Verwendung solcher ätzenden Säuren sorgt bei einer preisgünstigen Herstellungsweise für einen einwandfreien Verbund zwischen dem katalytisch aktiven Material und der Metalloberfläche des Katalysatorträgers. Ein solcher Katalysator kann daher mit hoher Betriebssicherheit eingesetzt werden. Die so hergestellten Katalysatoren haben hohe Reflexibilität und Stabilität im Abgas-, beispielsweise Rauchgasstrom. Derartige Katalysatoren können problemlos in die für den Einsatz günstigste Gestalt in Abgasrohrkanälen, Strömungsreaktoren, Luftvorwärmern, Rekuperatoren und dergleichen eingesetzt werden. Mit ihnen lassen sich freie Strömungsquerschnitte von mehr als 80% erreichen. Die Art der Schaffung der Haftung des katalytisch aktiven Materials auf der Metalloberfläche eröffnet ferner den Einsatz einer breiten Palette von Katalysatormaterialien über breite Temperaturbereiche, wie sie bisher nicht möglich war.

Das erfindungsgemäße Verfahren wird gemäß einer besonderen Ausführungsform beispielsweise dadurch ausgeführt, daß man den Träger mit einem Gemisch aus der Säure und dem katalytisch aktiven Material, und ggf. weiteren Komponenten, in an sich bekannter Weise z.B. durch Aufstreichen oder Aufspritzen des säurehaltigen Gemisches auf den Träger oder durch Eintauchen des Trägers in das säurehaltige Gemisch beschichtet.

In manchen Fällen, in welchen das katalytisch aktive Material in Pulverform, beispielsweise als keramisches Pulver, vorliegt, ist es zweckmäßig, wenn man den Träger mit dem Gemisch aus der Säure und dem katalytisch aktiven Material dadurch beschichtet, daß man den Träger zunächst in die Säure eintaucht und erst anschließend mit dem pulverförmig katalytisch aktiven Material bestäubt.

Bei dem erfindungsgemäßen Verfahren kann man mit Vorteil als katalytisch aktives Material natürliche Rohstoffe, wie Eisenerz, Chromerz oder Zeolith und/oder synthetische Stoffe und/oder industrielle Abfallstoffe, wie Schlacke, Schlämme oder Zunder, verwenden.

Ferner ist es bei dem erfindungsgemäßen Herstellungsverfahren möglich, dem Gemisch aus der Säure und dem katalytisch aktiven Material Aktivatoren (z.B. Elemente bzw. Oxide der 7. und 8. Hauptgruppe) und/oder Inhibitoren beizumischen.

Für die praktische Ausführung des erfindungsgemäßen Verfahrens und die Anwendung der dabei entstehenden Katalysatoren hat es sich als besonders zweckmäßig erwiesen, wenn man als Träger ein Drahtnetz, -gewebe oder -gestricke aus Edelstahl mit einer geringen Gesamtstärke von etwa 0,4 bis 0,6 z.B. etwa 0,5 mm, vor der Beschichtung verwendet. Derartige Trägernetzwerke sind aus hitze- oder säurebeständigen Stählen, welche im Rahmen der Erfindung vorzugsweise eingesetzt werden, im Markt kostengünstig zu erhalten, die Haftung des katalytisch aktiven Materials ist gut und der Wirkungsgrad so hergestellter Katalysatoren groß. Sie lassen sich zudem auf einfache Weise in jede gewünschte Form bringen.

Der Träger wird dabei vorzugsweise so beschichtet, daß sich für den beschichteten Träger eine Gesamtstärke von etwa 0,8 bis 1,0 mm, z.B. etwa 0,9 mm, ergibt. Hierdurch wird das Ziel der Betriebssicherheit der so hergestellten Katalysatoren unter Vermeidung eines Verlustes von katalytisch aktivem Material bei der Verformung bzw. bei deren Einsatz möglichst gering gehalten.

Das erfindungsgemäße Verfahren zur Erzeugung von Katalysatoren wird nachfolgend anhand von Ausführungsbeispielen näher erläutert :

## 1. Beispiel für das Tauchverfahren :

Herstellung eines Schlickers :

In 13 Gew.-% Wasser (bezogen auf die Gesamtmenge) werden 65 Gew.-% Feststoff, z.B. Eisen- oder Chromerz oder ein Gemisch beider Komponenten, unter 0,2-1,0 Gew.-% Zugabe eines säurestabilen Verflüssigers in der Art eines polyelektrolyten oder eines grenzflächenaktiven Esters dispergiert.

Anschließend erfolgt eine Zugabe von 22 Gew.-% Schwefelsäure 50%-ig.

Beispielsweise Zusammensetzung :

10-15 Gew.-% Wasser
0,2-1,0 Gew.-% Verflüssiger
65 Gew.-% Feststoff (Eisen-/Chromerz)
20-25 Gew.-% $H_2SO_4$ 50%-ig

Es kann ein stufenweiser Austausch des Wassers gegen eine niederprozentigere Schwefelsäure erfolgen.

Beispiel für einen vollständigen Austausch :

35 Gew.-% $H_2SO_4$ 25%-ig
0,2-1,0 Gew.-% Verflüssiger
65 Gew.-% Feststoff (Eisen-/Chromerz)

Der Schlicker wird in ein geeignetes Tauchgefäß gegeben und die Formkörper, bzw. ein Endlosband, durch das Tauchbad gezogen.

Zur Verhinderung der Mitnahme von Luftblasen in das Tauchbad ist das zu beschichtende Drahtgewebe in einem möglichst stumpfen Winkel in das Tauchbad einzuführen. Die Viskosität des Schlickers während des Tauchvorganges liegt zwischen 50 und 300, vorzugsweise zwischen 70 und 150 mPa · s.

Direkt im Anschluß erfolgt eine kontinuierliche Temperung der Formkörper, vorzugsweise bis 450°C, wobei eine Temperatursteigerung von etwa 50°C pro Minute angestrebt wird, mit einer Haltezeit von ≥ 5 Minuten bei Endtemperatur.

Im Falle der Verwendung eines Endlosbandes erfolgt nach der Temperung der entsprechende Zuschnitt der gewünschten Formkörper.

## 2. Beispiel für das Spritzverfahren :

Es wird ein Schlicker, wie in Beispiel 1 beschrieben, hergestellt.

Mit einer Anordnung von 2-Stoffdüsen wird der Schlicker fein versprüht, so daß eine geschlossene Sprühnebelwand entsteht, durch welche die Formkörper, bzw. ein Endlosband kontinuierlich hindurchgeführt werden, wobei eine blasenfreie Beschichtung aufgetragen wird.

Im Anschluß erfolgt analog zu Beispiel 1 die Temperung und bei Verwendung eines Endlosbandes der Zuschnitt nach dem Tempern.

Zur Steuerung der Oberflächenrauhigkeit und der Porosität der Oberfläche, wird bei der Herstellung des Schlickers in Beispiel 1 und 2 dem Wasser etwa 0,5 bis 2% eines säurestabilen, schäumenden Mittels zugesetzt, vorzugsweise 1%, wie z.B. ein Polyvinylalkohol.

## 3. Beispiel zur Bepuderung eines säurebenetzten Drahtgewebes :

Die Benetzung des Drahtgewebes erfolgt vorzugsweise durch Tauchen oder Besprühen der Formkörper mit einer 50 bis 98%-igen Schwefelsäure.

Direkt im Anschluß erfolgt die Bepuderung mit dem gewünschten Feststoff (z.B. Eisen-/Chromerzstaub) mit einer Feinheit < 0,1 mm, vorzugsweise 10-50 μm.

Die Bepuderung erfolgt diskontinuierlich in einer Wirbelschicht, in welcher die Formkörper einem Luft-Erzstaub-Gemisch ausgesetzt werden, wobei bis zur Ausschöpfung der Bindekraft der Säure sich der Staub an den Flächen der Formkörper anlagert.

Zur Unterstützung des Anlagerungsprozesses kann in der Wirbelschicht zusätzlich ein elektrisches Feld ausgebildet werden, wobei die zu beschichtenden Drahtgewebe-Formkörper die Rolle der Niederschlagselektrode übernehmen.

Im Anschluß erfolgt analog zu Beispiel 1 eine Temperung vorzugsweise bis 450°C.

## Patentansprüche

1. Verfahren zur Erzeugung von Katalysatoren für die Reduktion von Stickoxiden aus Abgasen und dergleichen chemische Luftreinigungsverfahren, bei welchem ein katalytisch aktives Material auf einen Träger aus Metall, vorzugsweise Edelstahl, in Form einer gelochten Metallplatte, von Streckmetall, eines Netzwerkes, vorzugsweise Gewebes, Gewirkes oder Gestrickes, aus Metalldraht, mit hoher spezifischer Oberfläche aufgetragen und daran gebunden wird, dadurch gekennzeichnet, daß man als Binder des katalytisch aktiven Materials eine die Oberfläche des metallischen Trägers ätzende Säure verwendet und daß man den beschichteten Träger trocknet und/oder temperiert und/oder brennt.

2. Verfahren nach Anspruch 1, dadurch gekennzeichnet, daß man den Träger mit einem Gemisch aus der Säure und dem katalytisch aktiven Material in an sich bekannter Weise, vorzugsweise durch Aufstreichen oder Aufspritzen des säurehaltigen Gemisches auf den Träger oder durch Eintauchen des Trägers in das säurehaltige Gemisch beschichtet.

3. Verfahren nach Anspruch 1, dadurch gekennzeichnet, daß man den Träger mit dem Gemisch aus der Säure und dem katalytisch aktiven Material dadurch beschichtet, daß man den Träger in die Säure eintaucht und anschließend mit dem pulverförmigen katalytisch aktiven Material bestäubt.

4. Verfahren nach einem der Ansprüche 1 bis 3, dadurch gekennzeichnet, daß man als katalytisch aktives Material natürliche Rohstoffe, wie Eisenerz, Chromerz oder Zeolith, und/oder synthetische Stoffe und/oder industrielle Abfallstoffe, wie Schlacke, Schlämme oder Zunder, verwendet.

5. Verfahren nach einem der Ansprüche 1 bis 4, dadurch gekennzeichnet, daß man dem Gemisch aus der Säure und dem katalytisch aktiven Material Aktivatoren und/oder Inhibitoren beimischt.

6. Verfahren nach einem der Ansprüche 1 bis 5, dadurch gekennzeichnet, daß man als Träger ein Drahtnetz, -gewebe, -gewirke oder -gestricke aus Edelstahl mit einer geringen Gesamtstärke von etwa 0,4 bis 0,6 mm, z.B. etwa 0,5 mm, vor der Beschichtung verwendet.

7. Verfahren nach Anspruch 6, dadurch gekennzeichnet, daß man den Träger in der Weise beschichtet, daß sich für den beschichteten Träger eine Gesamtstärke von etwa 0,8 bis 1,00 mm, z.B. etwa 0,9 mm, ergibt.

## Claims

1. Method for the production of catalysts for the reduction of nitrogen oxides from exhaust gases and similar chemical air purification processes in which a catalytically active material is applied to a carrier of high specific surface area and of metal, preferably high quality steel, in the form of an apertured metal plate, expanded metal, a network, preferably a gauze, woven structure or knitted structure, of metal wire, and bonded thereto, characterised in that an acid which etches the surface of the metallic carrier is used as the bonder of the catalytically active material and that the coated carrier is dried and/or tempered and/or fired.

2. Process as claimed in Claim 1, characterised in that the carrier is coated with a mixture of the acid and the catalytically active material in a manner known per se, preferably by spreading or spraying the acid-containing mixture onto the carrier or by dipping the carrier into the acid-containing mixture.

3. Process as claimed in Claim 1, characterised in that the carrier is coated with the mixture of the acid and the catalytically active material by dipping the carrier into the acid and subsequently dusting it with the pulverulent catalytically active material.

4. Process as claimed in one of Claims 1 to 3, characterised in that natural raw materials, such as iron ore, chrome ore or zeolite and/or synthetic materials and/or industrial waste materials, such as slag, slurries or cinders, are used as the catalytically active material.

5. Process as claimed in one of Claims 1 to 4, characterised in that activators and/or inhibitors are mixed into the mixture of the acid and the catalytically active material.

6. Process as claimed in one of Claims 1 to 5, characterised in that a wire network, gauze, woven structure or knitted structure of high quality steel with a small overall thickness of about 0.4 to 0.6 mm, e.g. about 0.5 mm, for the coating is used as the carrier.

7. Process as claimed in Claim 6, characterised in that the carrier is coated in such a manner that an overall thickness of the coated carrier of 0.8 to 1.0 mm, e.g. about 0.9 mm, is produced.

## Revendications

1. Procédé de fabrication de catalyseurs pour la réduction d'oxydes d'azote de gaz d'échappement et procédés chimiques analogues de purification d'air, dans lequel on applique un matériau à action catalytique sur un support en métal, de préférence en acier spécial, ayant la forme d'une plaque métallique perforée, de métal déployé, d'un réseau, de préférence de tissu, de tricot ou de tissu à mailles en fils métalliques de grande surface spécifique, et on le lie à celui-ci, caractérisé par le fait que, comme liant du matériau à action catalytique, on utilise un acide attaquant la surface du support métallique et que l'on sèche, et/ou que l'on porte à température équilibrée et/ou que l'on cuit le support enduit.

2. Procédé selon la revendication 1, caractérisé par le fait que l'on enduit le support d'un mélange constitué par l'acide et le matériau à action catalytique de façon connue en soi, de préférence par application directe ou au pistolet du mélange acide sur le support ou par immersion du support dans le mélange acide.

3. Procédé selon la revendication 1, caractérisé par le fait que l'on enduit le support d'un mélange constitué par l'acide et le matériau à action catalytique en plongeant le support dans l'acide et en le saupoudrant ensuite avec le matériau pulvérulent à action catalytique.

4. Procédé selon l'une des revendications 1 à 3, caractérisé par le fait que, comme matériau à action catalytique, on utilise des matières brutes naturelles telles que le minerai de fer, le minerai de chrome ou la zéolite et/ou des matières synthétiques et/ou des déchets industriels commes les scories, les fines ou le machefer.

5. Procédé selon l'une des revendications 1 à 4, caractérisé par le fait que l'on ajoute des activateurs et/ou des inhibiteurs au mélange constitué par l'acide et le matériau à action catalytique.

6. Procédé selon l'une des revendications 1 à 5, caractérisé par le fait que somme support, on utilise un réseau, un tissu ou un tricot de fils métalliques en acier spécial ayant une faible épaisseur totale d'environ 0,4 à 0,6 mm, par exemple d'environ 0,5 mm, avant l'enduction.

7. Procédé selon la revendication 6, caractérisé par le fait que l'on enduit le support de façon qu'il en résulte une épaisseur totale d'environ 0,8 à 1,00 mm, par exemple d'environ 0,9 mm pour le support enduit.